# EUROPEAN PATENT APPLICATION

(11) **EP 4 390 481 A1**
(43) Date of publication of application: **26.06.2024**
(21) Application number: 23218416.8
(22) Date of filing: 20.12.2023
(51) Int. Cl.: G02B 6/12, G02B 6/122, G02B 6/125

(54) **OPTICAL MODE COUPLER IN INTEGRATED PHOTONICS**

(30) Priority: 22.12.2022 US 202218087792
(71) Applicant: Nokia Solutions and Networks Oy, 02610 Espoo (FI)
(72) Inventor: ZHENG, Jiabao, Fremont, CA (US); HORTH, Alexandre, Astoria, NY (US); SHI, Ruizhi, Quincy, MA (US)
(74) Representative: Nokia EPO representatives

(57) **Abstract**

An optical device comprises a photonic integrated circuit having an optical mode coupler. The optical mode coupler optically couples a first planar optical waveguide having a first optical core at one horizontal plane to a second planar optical waveguide having a second optical core at a different second horizontal plane. The optical mode coupler comprises two or more intermediate optical layers stacked vertically between the horizontal planes of the optical cores, and intermediate optical layer comprises one or more optical rails. The optical mode coupler causes light received from the first planar optical waveguide to excite an optical mode and guide the light of the optical mode such that the optical mode substantially overlaps the first planar optical waveguide and the optical rails of at least two of the intermediate optical layers in a vertical cross-section of the photonic integrated circuit.

## Description

### Technical Field

Various example embodiments relate to the field of optical communications.

### Background

Silicon photonics is used for the manufacture of photonic integrated circuits (PICs). Silicon photonics is typically compatible with complementary metal-oxide-semiconductor (CMOS) fabrication, which allows PICs to be manufactured using established foundry infrastructure. The material platform for a PIC may be a silicon-on-insulator (SOI) wafer, and multiple layers may be deposited, patterned, etc., on the SOI wafer. In integrated photonics, optical waveguides are used to interconnect photonic devices or associated functions on the PIC. For example, an optical waveguide may have an optical core patterned in the silicon device layer of the SOI wafer or in another layer deposited on the SOI wafer (e.g., a layer of silicon nitride). As the demand for bandwidth continues to grow, traditional silicon modulators are becoming more difficult to meet requirements. Thus, photonics devices made with nonconventional materials (e.g., Lithium Niobate, Indium Phosphide (InP), etc.) may be integrated on the PIC through wafer-level or PIC-level hybrid integration processes. These nonconventional materials are integrated on the silicon photonic platform to take advantage of both the mature processing of silicon (as well as abundant and well-developed silicon-based photonic device libraries), and the properties of certain nonconventional materials. These nonconventional materials are usually integrated at the backend (or final steps) of silicon photonic processes due to foundry constraints. Hence, the photonics devices are located in the "upper" level of the material stack.

To optically couple a "lower" optical waveguide to an "upper" optical waveguide of an integrated photonics device, an optical mode coupler may be used. There may be a relatively large distance between the lower optical waveguide and the upper optical waveguide, preventing efficient direct evanescent optical coupling. Thus, an optical mode coupler is used to transfer light from the lower optical waveguide across many intermediate layers of the PIC to the upper optical waveguide.

### Summary

Various embodiments provide an enhanced optical mode coupler. In general, the optical mode coupler provides optical coupling between a first planar optical waveguide and a second planar optical waveguide that are separated by a vertical gap. The optical mode coupler includes a plurality of intermediate optical rails between the optical waveguides. The intermediate optical rails at least partially overlap with the first planar optical waveguide at a vertically-overlapping region, and at least partially overlap with the second planar optical waveguide at the same or another vertically-overlapping region, to support a "super" optical mode cooperatively by the intermediate optical rails, as the efficient medium to transfer optical power across the vertical gap. Optical power efficiently transitions from the optical mode of the first planar optical waveguide to the optical supermode supported by the intermediate optical rails, and from the optical supermode supported by the intermediate optical rails to the optical mode of the second planar optical waveguide (or vice-versa) at the vertically-overlapping region(s). One technical benefit of an optical mode coupler as disclosed herein is lower optical coupling loss between the optical waveguides compared to prior designs. Another technical benefit is the design has a reduced footprint compared to prior designs.

In an embodiment, an optical device comprises a photonic integrated circuit having an optical mode coupler. The optical mode coupler optically couples a first planar optical waveguide having a first optical core at one horizontal plane of the photonic integrated circuit to a second planar optical waveguide having a second optical core at a different second horizontal plane of the photonic integrated circuit. The optical mode coupler comprises two or more intermediate optical layers stacked vertically between the horizontal planes of the optical cores of the planar optical waveguides in the photonic integrated circuit. Each of the intermediate optical layers comprises one or more optical rails, and the optical mode coupler comprises optical cladding of a lower refractive index around the optical rails. The optical mode coupler is configured to cause light received from the first planar optical waveguide to excite an optical mode and guide the light of the optical mode such that the optical mode substantially overlaps the first planar optical waveguide and the optical rails of at least two of the intermediate optical layers in a vertical cross-section of the photonic integrated circuit.

In an embodiment, the optical mode coupler is configured to guide the light of the optical mode such that the optical mode substantially overlaps the second planar optical waveguide and the optical rails of at least two of the intermediate optical layers in the same or another vertical cross-section of the photonic integrated circuit.

In an embodiment, at least one of the intermediate optical layers has two or more of the optical rails.

In an embodiment, at least one of the optical rails of the at least one of the intermediate optical layers is located on each side of the optical cores.

In an embodiment, central segments of the two or more of the optical rails are more separated than ends of the two or more of the optical rails.

In an embodiment, the planar optical waveguides are configured to have a fundamental optical mode in at least one of an optical communications C-band, O-band, S-band, and L-band.

In an embodiment, the second optical core of the second planar optical waveguide has a refractive index smaller than a refractive index of the first optical core of the first planar optical waveguide.

In an embodiment, part of the optical mode coupler is vertically located between tapered portions of the optical cores of the first and second planar optical waveguides.

In an embodiment, the optical rails extend about parallel to ends of the optical cores of the planar optical waveguides, and at least one of the intermediate optical layers has the optical rails located on opposite sides of the first optical core.

In an embodiment, the one of the intermediate optical layers closest to the second planar optical waveguide has a single one of the optical rails located vertically below the second optical core of the second planar optical waveguide.

In an embodiment, the optical mode coupler is vertically located between tapered portions of the first and second optical cores of the planar optical waveguides.

In an embodiment, at least some of the optical rails are tapered at both ends thereof.

In an embodiment, the second optical core comprises Lithium Niobate, and the first optical core is a silicon nitride optical core.

In an embodiment, the second optical core comprises a group III-V semiconductor material or a group II-VI semiconductor material, and the first optical core is a silicon nitride optical core.

In an embodiment, the second optical core comprises Barium Titanate.

In an embodiment, the second optical core is a silicon optical core, and the first optical core is a silicon nitride optical core.

In an embodiment, the first optical core is a silicon optical core.

In an embodiment, the optical rails are silicon nitride optical rails.

In an embodiment, the optical device further comprises a Mach-Zehnder optical modulator. The optical mode coupler is part of an optical input or an optical output of the Mach-Zehnder optical modulator.

In an embodiment, the optical device further comprises a coherent optical transmitter including the optical mode coupler.

One or more of the above embodiments may be combined as desired.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments are now described, by way of example only, and with reference to the accompanying drawings. The same reference number represents the same element or the same type of element on all drawings.
FIGS. 1A-1C are schematic diagrams of a portion of a photonic integrated circuit (PIC) with an optical mode coupler in an illustrative embodiment.
FIGS. 2A-2B are side views of a PIC in an illustrative embodiment.
FIGS. 3A-3E are cross-sectional views of a PIC in an illustrative embodiment.
FIGS. 4-8 are top views of a PIC at different horizontal planes in an illustrative embodiment.
FIG. 9 illustrates optical devices that implement one or more optical mode couplers in an illustrative embodiment.
FIG. 10 illustrates an optical device that implements one or more Mach-Zehnder Modulators (MZM) in an illustrative embodiment.
FIG. 11 is a top view of a PIC at a horizontal plane in another illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the claims. The inventive concepts are not limited to the specific embodiments or examples described below, but are defined by the claims and their equivalents.

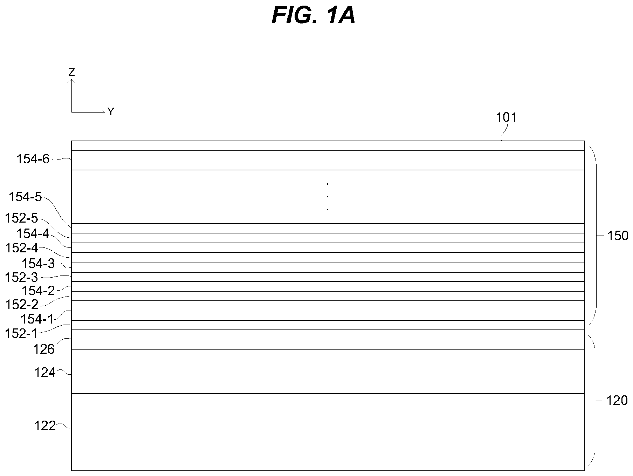

FIG. 1A is a schematic diagram of a portion of a photonic integrated circuit (PIC) 101 in an illustrative embodiment. The view of PIC 101 in FIG. 1A is to show the material layers that form a PIC 101. In this embodiment, PIC 101 is formed on a material platform comprising an SOI wafer 120. SOI wafer 120 has a silicon dioxide layer 124 (e.g., silicon buried oxide (BOX)) between a silicon device layer 126 and a substrate 122. A process stack 150 is formed on the SOI wafer 120, and includes alternating optical cladding layers 152 (e.g., 152-1, 152-2, etc.) and optical layers 154 (e.g., 154-1, 154-2, etc.) stacked vertically. An optical cladding layer 152 is formed from a cladding material (e.g., silicon dioxide) having a lower refractive index than an adjoining optical layer 154. In one embodiment, optical layers 154-1 through 154-5 (also referred to as intermediate optical layers) may be formed from an optical core material (e.g., silicon nitride (Si3Ni4)) having a higher refractive index than the optical cladding layers 152. Optical layer 154-6 may be formed from an optical core material that differs from silicon device layer 126, and other optical layers 154-1 through 154-5 of process stack 150. For example, optical layer 154-6 may be formed from a nonconventional material such as Lithium Niobate (LiNbO3), a group III-V semiconductor material, a group II-VI semiconductor material, Barium Titanate (BaTiO3), etc.

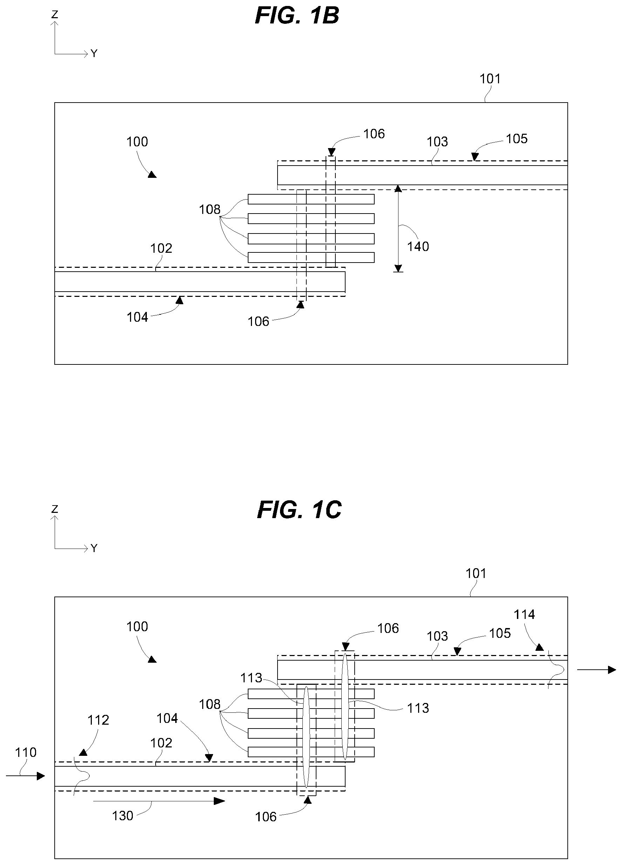

FIGS. 1B-1C are schematic diagrams of a portion of PIC 101 with an optical mode coupler 100 therein, in an illustrative embodiment. The views in FIGS. 1B-1C are side views of optical mode coupler 100 in the PIC 101. The optical mode coupler 100 optically couples an optical propagating mode of one planar optical waveguide to another planar optical waveguide, where the two planar optical waveguides often have fundamental optical modes with different lateral size, shape, and/or intensity and/or phase profile. The fundamental optical modes of the planar optical waveguides may be in an optical communications C-band, O-band, S-band, or L-band.

In this embodiment, PIC 101 includes a first planar optical waveguide 104 (or lower optical waveguide) and a second planar optical waveguide 105 (or upper optical waveguide) separated by a vertical gap 140. Optical waveguide 104 has an optical core 102 typically having a different material composition than an optical core 103 of optical waveguide 105. The vertical gap 140 may be large enough where the coupling strength between optical waveguides 104-105 is too low to allow for direct evanescent optical coupling between the optical waveguides 104-105. Thus, optical mode coupler 100 includes a plurality of intermediate optical rails 108, i.e., regions of higher optical refractive index than surrounding optical cladding, disposed between the optical waveguide 104 and optical waveguide 105. Optical waveguide 104 and optical waveguide 105 are optically coupled via an optical supermode supported by the collection of intermediate optical rails 108 and nearby optical cladding, e.g., doped or undoped silicon dioxide.

Optical mode coupler 100 may be formed on a SOI wafer 120 as shown in FIG. 1A. In one embodiment, the optical core 102 of optical waveguide 104 may be formed or patterned in the silicon device layer 126 of the SOI wafer 120. In another embodiment, the optical core 102 of optical waveguide 104 may be formed or patterned in another optical layer 154 of process stack 150, such as the optical layer 154-1 (e.g., a layer of silicon nitride) closest to the silicon device layer 126. The optical core 103 of optical waveguide 105 is formed or patterned in an optical layer 154-6 of process stack 150 (e.g., silicon nitride, Lithium Niobate, amorphous silicon, etc.). Intermediate optical rails 108 are formed or patterned in optical layers 154 of process stack 150 between the optical core 102 of optical waveguide 104 and the optical core 103 of optical waveguide 105 to collectively couple light between the optical waveguides 104-105 on different horizontal planes. The optical core 102 of optical waveguide 104 overlaps with the intermediate optical rails 108 patterned on two or more of the different horizontal planes, three or more of the different horizontal planes, etc., at a vertically-overlapping region 106 (e.g., vertical cross-section). The optical core 103 of optical waveguide 105 also overlaps with the intermediate optical rails 108 patterned on three or more of the different horizontal planes at the same or a different vertically-overlapping region 106 (e.g., vertical cross-section). Through these vertically overlapping layers, optical power optically couples efficiently between optical waveguides 104-105 by an evanescent optical coupling.

In FIG. 1C, when light 110 is introduced into optical waveguide 104, for example, and propagates in a light propagation direction 130, a single optical mode 112 of optical waveguide 104 changes to a larger optical mode (referred to generally herein as an optical supermode 113) vertically overlapping intermediate optical rails 108. In particular, the lateral pattern of intermediate optical rails 108 and surrounding cladding causes light guided by the nearby optical waveguide 104 to spread outside of the optical waveguide 104 in intermediate optical rails 108. In a longitudinal segment of the vertically-overlapping region 106 between optical waveguides 104 and 105, the larger optical propagating mode, i.e., herein referred to as optical supermode 113, may have substantial optical overlap between optical waveguide 104 and intermediate optical rails 108 patterned on multiple horizontal planes. Likewise, in a longitudinal segment of the same or another vertically-overlapping region 106 between optical waveguides 104 and 105, the optical supermode 113 may have substantial optical overlap between optical waveguide 105 and intermediate optical rails 108 patterned on multiple horizontal planes. In one embodiment, in a longitudinal segment of a vertically-overlapping region 106 between optical waveguides 104 and 105, the optical supermode 113 may have substantial optical coupling with both optical waveguides 104 and 105 due to the pattern of intermediate optical rails 108 located between adjacent segments thereof. That is, the optical supermode 113 may have an evanescent coupling to both optical cores 102-103 of optical waveguides 104-105 in the same vertical slice through the PIC 101.

Thus, the single optical mode 112 of optical waveguide 104 transitions to an optical supermode 113 where optical power is present in optical waveguide 104 and multiple intermediate optical rails 108 at a vertically-overlapping region 106. At the same or another vertically-overlapping region 106, optical power is present in optical waveguide 105 and multiple intermediate optical rails 108 where the optical supermode 113 transitions to the single optical mode 114 of optical waveguide 105 (as light 110 propagates from left to right in FIG. 1C).

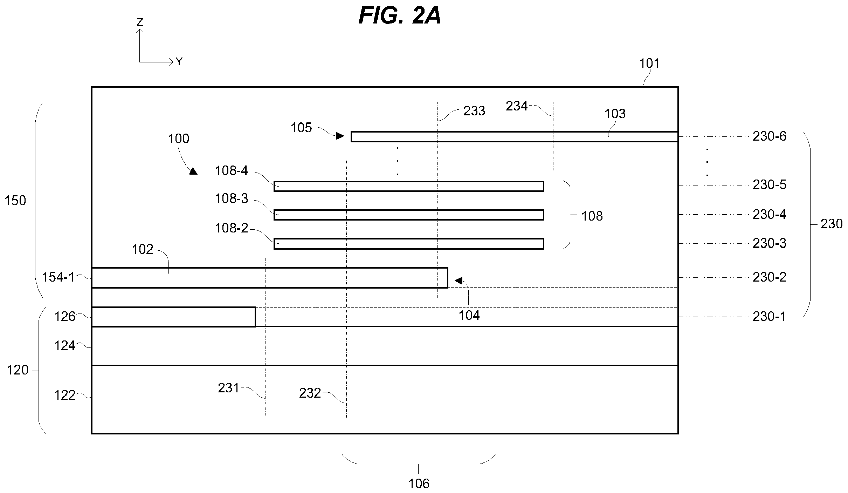

FIGS. 2A-2B are side views of PIC 101 in an illustrative embodiment. FIGS. 2A-2B are not drawn to scale. In FIG. 2A, the optical core 102 of optical waveguide 104 is formed or patterned in an optical layer 154-1 of the process stack 150. For example, optical layer 154-1 (e.g., silicon nitride) is etched or otherwise patterned to define optical core 102 of a certain length and width. Optical core 102 is vertically confined between two cladding layers to form optical waveguide 104. Other optical layers 154 of process stack 150 are etched or otherwise patterned to define intermediate optical rails 108 of a certain length and width. Intermediate optical rails 108 are vertically confined between two optical cladding layers 152. Optical layer 154-6 of process stack 150 is etched or otherwise patterned to define the optical core 103 of optical waveguide 105. For example, a layer of Lithium Niobate, amorphous silicon, etc., is etched or otherwise patterned to define optical core 103 of a certain length and width. Optical core 103 is vertically confined between two optical cladding layers to form optical waveguide 105.

Optical core 102, intermediate optical rails 108, and optical core 103 are disposed on different horizontal planes 230. For example, optical core 102 is disposed on horizontal plane 230-2, intermediate optical rails 108-2, 108-3, and 108-4 are disposed on horizontal planes 230-3, 230-4, and 230-5, respectively, and optical core 103 is disposed on horizontal plane 230-6. There is a vertical gap (i.e., along the z-axis) between each of the different horizontal planes 230.

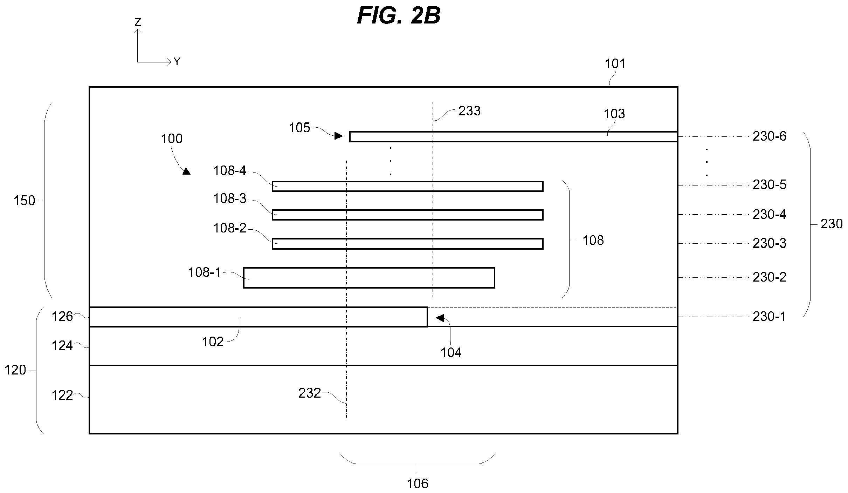

In FIG. 2B, the optical core 102 of optical waveguide 104 is formed or patterned in the silicon device layer 126 of the SOI wafer 120. For example, silicon device layer 126 of SOI wafer 120 is etched or otherwise patterned to form optical core 102 of optical waveguide 104 (which may be referred to as a silicon-core optical waveguide) of a certain length and width. Optical core 102 is vertically confined between two cladding layers (i.e., silicon dioxide layer 124 and an optical cladding layer 152) to form optical waveguide 104. Other optical layers 154 of process stack 150 are etched or otherwise patterned to define intermediate optical rails 108 of a certain length and width. Intermediate optical rails 108 are vertically confined between two optical cladding layers 152. Optical layer 154-6 of process stack 150 is etched or otherwise patterned to define the optical core 103 of optical waveguide 105. For example, a layer of Lithium Niobate, amorphous silicon, etc., is etched or otherwise patterned to define optical core 103 of a certain length and width. Optical core 103 is vertically confined between two optical cladding layers to form optical waveguide 105.

Optical core 102, intermediate optical rails 108, and optical core 103 are disposed on different horizontal planes 230. For example, optical core 102 is disposed on horizontal plane 230-1, intermediate optical rails 108-1, 108-2, 108-3, and 108-4 are disposed on horizontal planes 230-2, 230-3, 230-4, and 230-5, respectively, and optical core 103 is disposed on horizontal plane 230-6. There is a vertical gap (i.e., along the z-axis) between each of the different horizontal planes 230.

In FIGS. 2A-2B, optical core 102 vertically overlaps with intermediate optical rails 108 patterned at three or more different horizontal planes 230 at a vertically-overlapping region 106, which is indicated by a transverse plane 232. Optical core 103 vertically overlaps with intermediate optical rails 108 patterned at three or more different horizontal planes 230 at the same or another vertically-overlapping region 106, which is indicated by a transverse plane 233. In an embodiment, optical core 102 may vertically overlap with intermediate optical rails 108 patterned at three or more different horizontal planes 230, and with optical core 103 at a vertically-overlapping region 106.

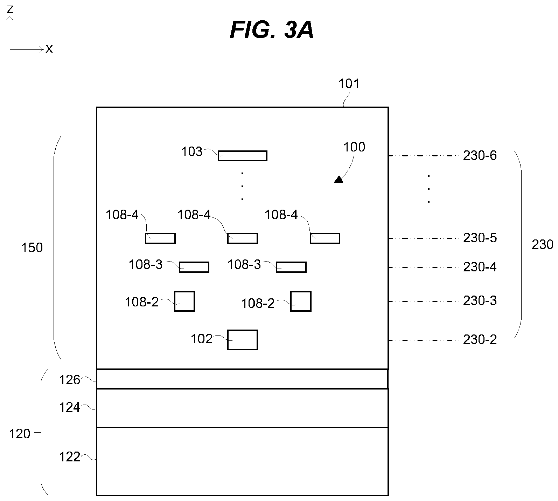

FIGS. 3A-3E are cross-sectional views of PIC 101 in an illustrative embodiment. FIGS. 3A-3E are not drawn to scale. The view in FIG. 3A is across a transverse cut plane 233 (e.g., along the x-axis), generally perpendicular to the light propagation direction 130, as shown in FIG. 2A. Optical core 102 is disposed along horizontal plane 230-2, which is formed or patterned in an optical layer 154-1 of the process stack 150 (see also, FIG. 1A). Optical core 103 is disposed along horizontal plane 230-6, which is formed from an optical material of higher refractive index than adjacent optical cladding. Optical mode coupler 100 includes a plurality of intermediate optical rails 108 disposed along different horizontal planes 230 (i.e., 230-3 through 230-5) between optical core 102 and optical core 103. For example, a pair of intermediate optical rails 108-2 may be patterned at horizontal plane 230-3, and are shown as offset width-wise from (e.g., along the x-axis) or located on opposite sides of optical core 102. However, the number or position of the pattern of intermediate optical rails 108-1 at horizontal plane 230-3 may vary in different embodiments. A pair of intermediate optical rails 108-3 may be patterned at horizontal plane 230-4, and are shown as offset width-wise from optical core 102. However, the number or position of the pattern of intermediate optical rails 108-3 at horizontal plane 230-4 may vary in different embodiments. Three intermediate optical rails 108-4 may be patterned at horizontal plane 230-5, with one of the intermediate optical rails 108-4 shown as generally aligned with optical core 103, and a pair of the intermediate optical rails 108-4 offset width-wise from optical core 103. However, the number and position of the pattern of intermediate optical rails 108-4 at horizontal plane 230-5 may vary in different embodiments.

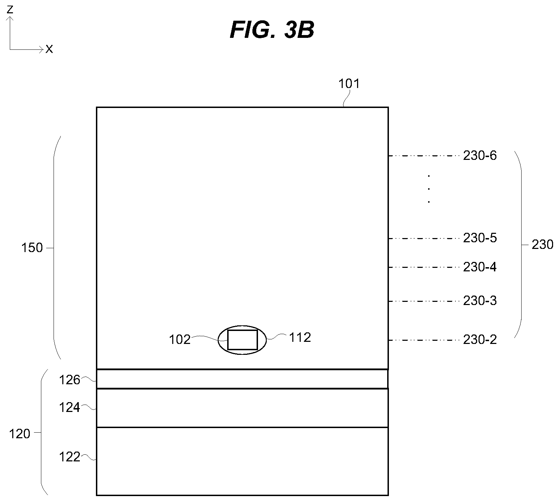

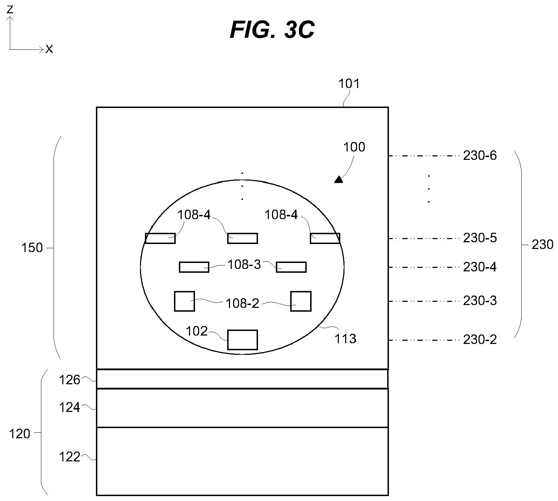

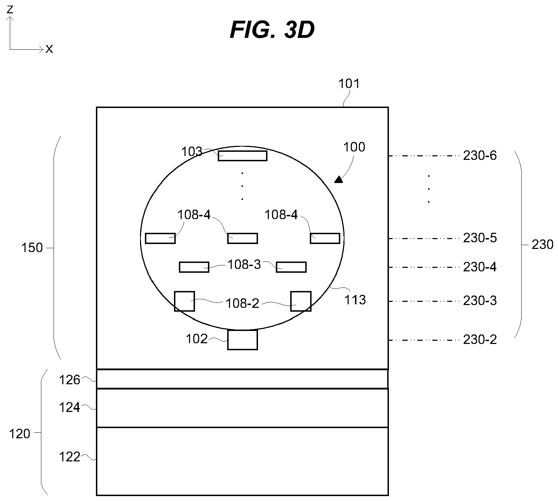

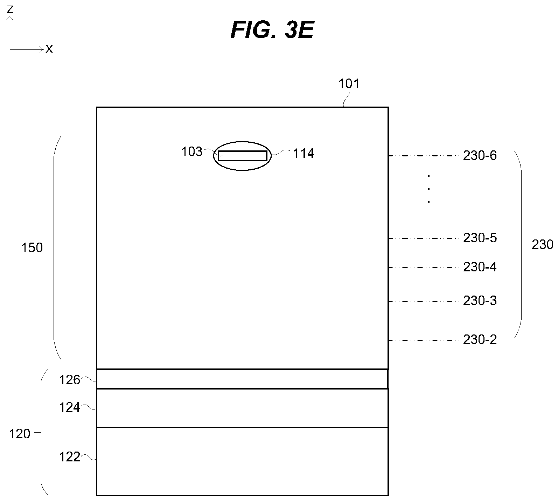

FIGS. 3B-3E illustrate propagation of optical modes in an illustrative embodiment. The view in FIG. 3B is across transverse cut plane 231 as shown in FIG. 2A. Optical waveguide 104 has a fundamental optical mode 112 as light 110 propagates along optical core 102. The view in FIG. 3C is across transverse cut plane 232 as shown in FIG. 2A. The intermediate optical rails 108 have a higher refractive index than surrounding optical cladding 152 (see FIG. 1A), and the pattern of intermediate optical rails 108 excites an optical supermode 113 substantially overlapping the optical core 102 of optical waveguide 104 and intermediate optical rails 108 along a segment thereof. An optical propagation mode substantially overlaps a structure at a cross section of an optical guiding structure if a light intensity of the optical propagation mode at the structure is at least, one percent of a maximum intensity of the optical propagation mode at said cross section. Preferably, said light intensity of the optical propagation mode substantially overlapping the structure is at least (1/e)² of the maximum intensity of the optical propagation mode at said cross section. The view in FIG. 3D is across transverse cut plane 233 as shown in FIG. 2A. As the light 110 propagates, optical supermode 113 substantially overlaps the intermediate optical rails 108 and the optical core 103 of optical waveguide 105 along a segment thereof. The view in FIG. 3E is across transverse cut plane 234 as shown in FIG. 2A. As the light 110 propagates, the optical supermode 113 transitions to the fundamental optical mode 114 of optical waveguide 105.

Although not illustrated in FIGS. 3B-3E, the optical supermode 113 may overlap both optical waveguides 104-105 simultaneously at a transverse cross-section.

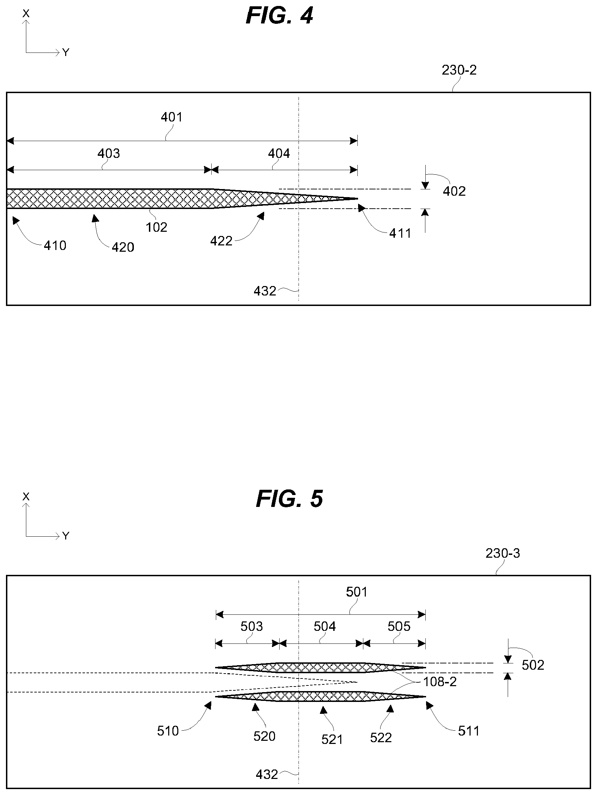

FIGS. 4-8 are top views of PIC 101 at different horizontal planes 230 in an illustrative embodiment. FIGS. 4-8 are not drawn to scale. FIG. 4 illustrates the optical core 102 at horizontal plane 230-2. The optical core 102 extends in a light propagation direction 130 (e.g., from left to right in FIG. 4) along length 401 between ends 410-411. The optical core 102 has a primary longitudinal portion 420, and tapers toward end 411. Thus, the optical core 102 has primary longitudinal portion 420 along sub-length 403 where the width 402 is at a target width, and a tapered portion 422 along sub-length 404 where the width 402 gradually narrows or decreases in a first longitudinal direction (i.e., to the right in FIG. 4). The target width of primary longitudinal portion 420 at least partially defines a single optical propagating mode 112 of optical waveguide 104.

FIG. 5 illustrates intermediate optical rails 108-2 at horizontal plane 230-3. The optical core 102 is shown in dotted lines to illustrate physical relationships between the layers. Each intermediate optical rail 108-2 extends in the light propagation direction 130 (e.g., from left to right in FIG. 5) along length 501 between ends 510-511. An intermediate optical rail 108-2 has a longitudinal middle portion 521 (also referred to as a central segment), and tapers toward ends 510-511. Thus, intermediate optical rail 108-2 has a first tapered portion 520 along sub-length 503 (or taper length) where the width 502 gradually narrows or decreases in a second longitudinal direction (i.e., to the left in FIG. 5), longitudinal middle portion 521 along sub-length 504 where the width 502 is at a target width, and a second tapered portion 522 along sub-length 505 where the width 502 gradually narrows or decreases in the first longitudinal direction (i.e., to the right in FIG. 5). Although two intermediate optical rails 108-2 are shown at horizontal plane 230-3, more or less intermediate optical rails 108-2 may be implemented in other embodiments.

In an embodiment, intermediate optical rails 108-2 overlap with the optical core 102 at a transverse plane 432 as shown in FIG. 5. In an embodiment, the first tapered portions 520 of intermediate optical rails 108-2 are generally in alignment with the tapered portion 422 of the optical core 102. In other words, the first tapered portions 520 and the tapered portion 422 overlap transversely across a width of PIC 101 (along x-axis). In looking at FIG. 5, at least a segment of the first tapered portions 520 coincide transversely with the tapered portion 422 of the optical core 102.

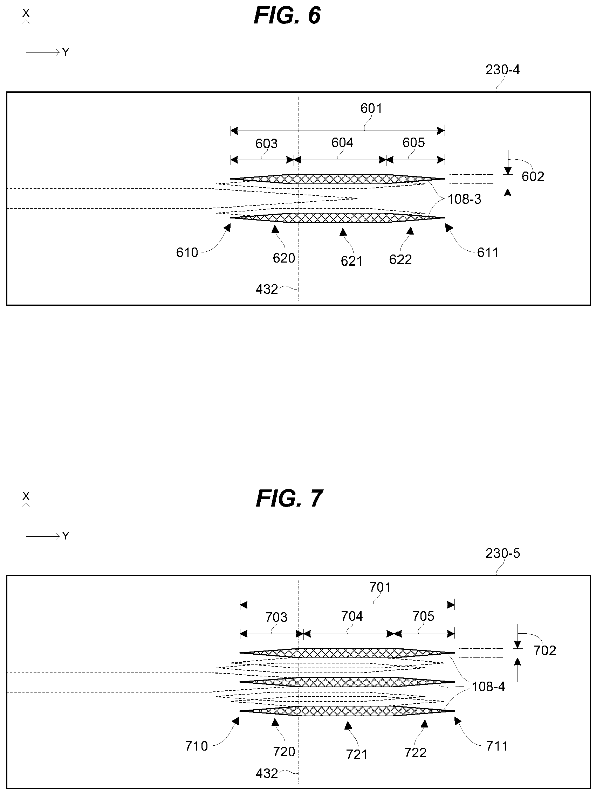

FIG. 6 illustrates intermediate optical rails 108-3 at horizontal plane 230-4. Layers below intermediate optical rails 108-3 are shown in dotted lines to illustrate physical relationships between the layers. Each intermediate optical rail 108-3 extends in the light propagation direction 130 (e.g., from left to right in FIG. 6) along length 601 between ends 610-611. An intermediate optical rail 108-3 has a longitudinal middle portion 621 (also referred to as a central segment), and tapers toward ends 610-611. Thus, intermediate optical rail 108-3 has a first tapered portion 620 along sub-length 603 (or taper length) where the width 602 gradually narrows or decreases in the second longitudinal direction (i.e., to the left in FIG. 6), longitudinal middle portion 621 along sub-length 604 where the width 602 is at a target width, and a second tapered portion 622 along sub-length 605 where the width 602 gradually narrows or decreases in the first longitudinal direction (i.e., to the right in FIG. 6). Although two intermediate optical rails 108-3 are shown at horizontal plane 230-4, more or less intermediate optical rails 108-3 may be implemented in other embodiments.

In an embodiment, intermediate optical rails 108-3 overlap with intermediate optical rails 108-2 and the optical core 102 at a transverse plane 432 as shown in FIG. 6. In an embodiment, the first tapered portions 620 of intermediate optical rails 108-3 are generally in alignment with the first tapered portions 520 of intermediate optical rails 108-2 and the tapered portion 422 of the optical core 102. In other words, the first tapered portions 620 of intermediate optical rails 108-3, the first tapered portions 520 of intermediate optical rails 108-2, and the tapered portion 422 of the optical core 102 overlap transversely across a width of PIC 101 (along x-axis). In looking at FIG. 6, at least a segment of the first tapered portions 620 coincide transversely with the first tapered portions 520 of intermediate optical rails 108-2 and the tapered portion 422 of the optical core 102.

FIG. 7 illustrates intermediate optical rails 108-4 at horizontal plane 230-5. Layers below intermediate optical rails 108-4 are shown in dotted lines to illustrate physical relationships between the layers. Each intermediate optical rail 108-4 extends in the light propagation direction 130 (e.g., from left to right in FIG. 7) along length 701 between ends 710-711. Intermediate optical rail 108-4 has a longitudinal middle portion 721 (also referred to as a central segment), and tapers toward ends 710-711. Thus, intermediate optical rail 108-4 has a first tapered portion 720 along sub-length 703 (or taper length) where the width 702 gradually narrows or decreases in the second longitudinal direction (i.e., to the left in FIG. 7), longitudinal middle portion 721 along sub-length 704 where the width 702 is at a target width, and a second tapered portion 722 along sub-length 705 where the width 702 gradually narrows or decreases in the first longitudinal direction (i.e., to the right in FIG. 7). Although three intermediate optical rails 108-4 are shown at horizontal plane 230-5, more or less intermediate optical rails 108-4 may be implemented in other embodiments.

In an embodiment, intermediate optical rails 108-4 overlap with intermediate optical rails 108-3, intermediate optical rails 108-2, and the optical core 102 at a transverse plane 432 as shown in FIG. 7. In an embodiment, the first tapered portions 720 of intermediate optical rails 108-4 are generally in alignment with the first tapered portions 620 of intermediate optical rails 108-3, the first tapered portions 520 of intermediate optical rails 108-2, and the tapered portion 422 of the optical core 102. In looking at FIG. 7, at least a segment of the first tapered portions 720 coincide transversely with the first tapered portions 620 of intermediate optical rails 108-3, the first tapered portions 520 of intermediate optical rails 108-2, and the tapered portion 422 of the optical core 102.

As described above, there may be more intermediate optical rails 108 disposed on other horizontal planes 230 between the optical core 102 and the optical core 103.

In this configuration, three or more intermediate optical rails 108 overlap with the optical core 102 at a transverse plane 432. The target width 402 of the optical core 102 at least partially defines a single optical mode 112 for optical waveguide 104. The widths of intermediate optical rails 108 are designed to be smaller than their corresponding single mode waveguide width to be operated in the sub-wavelength domain, giving rise to an optical supermode 113 supported collectively by intermediate optical rails 108that may efficiently interact with the optical core 102 and the intermediate optical rails 108 at the same time.

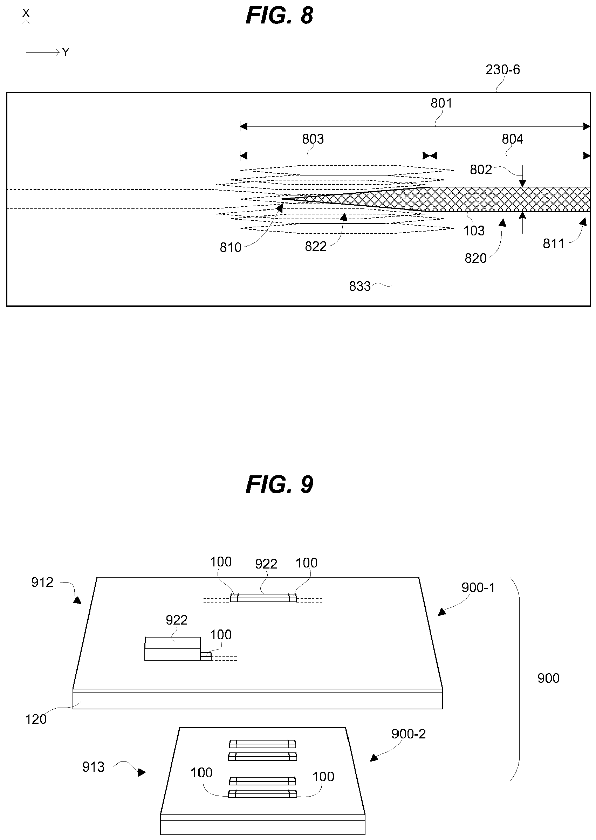

FIG. 8 illustrates the optical core 103 at horizontal plane 230-6. Layers below the optical core 103 are shown in dotted lines to illustrate physical relationships between the layers. The optical core 103 extends in the light propagation direction 130 (e.g., from left to right in FIG. 8) along length 801 between ends 810-811. The optical core 103 has a primary longitudinal portion 820, and tapers toward end 810. Thus, optical core 103 has primary longitudinal portion 820 along sub-length 804 where the width 802 is at a target width, and a tapered portion 822 along sub-length 803 where the width 802 gradually narrows or decreases in the second longitudinal direction (i.e., to the left in FIG. 8). The target width of primary longitudinal portion 820 at least partially defines a single optical propagating mode 114 of optical waveguide 105.

In an embodiment, the optical core 103 overlaps with intermediate optical rails 108-4, intermediate optical rails 108-3, and intermediate optical rails 108-2 at a transverse plane 833 as shown in FIG. 8. It is noted that the transverse plane 833 may be different or the same as the transverse plane 432 where the optical core 102 overlaps with intermediate optical rails 108-2, 108-3, and 108-4. In an embodiment, the tapered portion 822 of the optical core 103 is generally in alignment with the second tapered portions 722 of intermediate optical rails 108-4, the second tapered portions 622 of intermediate optical rails 108-3, and the second tapered portions 522 of intermediate optical rails 108-2. In looking at FIG. 8, at least a segment of the tapered portion 822 of the optical core 103 coincides transversely with the second tapered portions 722 of intermediate optical rails 108-4, the second tapered portions 622 of intermediate optical rails 108-3, and the second tapered portions 522 of intermediate optical rails 108-2.

In this configuration, three or more intermediate optical rails 108 overlap with the optical core 103 at a transverse plane 833. The target width 802 of the optical core 103 at least partially defines a single optical propagating mode 114 for optical waveguide 105. The target widths 502, 602, and 702 of the intermediate optical rails 108 may be less than a wavelength (i.e., have a sub-wavelength width) of the optical mode for optical waveguide 105. Thus, the optical supermode 113 among the intermediate optical rails 108 changes or transitions to the optical propagating mode 114 of optical waveguide 105.

With the configuration described in FIGS. 4-8, the width 402 of the optical core 102 gradually tapers down while the widths 502, 602, and 702 of the intermediate optical rails 108 gradually widen to their target width for single mode operation, allowing a single optical mode 112 of optical waveguide 104 to adiabatically transition to an optical supermode 113. Likewise, the widths 502, 602, and 702 of the intermediate optical rails 108 gradually taper from their target width while the width 802 of the optical core 103 gradually widens to its target width for single mode operation, allowing the optical supermode 113 to adiabatically transition to the single optical mode 114 of optical waveguide 105. This supermode-based coupling mechanism between optical waveguide 104 with optical core 102 and optical waveguide 105 with optical core 103 yields low-loss and compact optical mode transfer behavior across large vertical distances (e.g., 3-6 micrometers). Along the transition from the single optical mode 112 of optical waveguide 104 to the optical supermode 113 supported by the intermediate optical rails 108, and to the single optical mode 114 in optical waveguide 105, it is beneficial for the waveguide tapering to occur cooperatively and adiabatically, so higher-order supermodes are not excited during this transition.

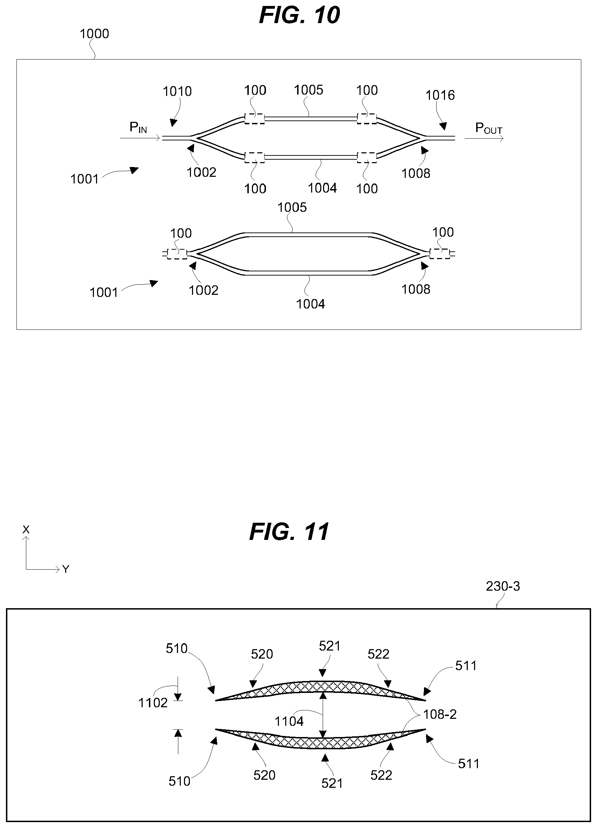

In the embodiments of FIGS. 4-8, intermediate optical rails 108 were illustrated as generally linear or straight between ends. In other embodiments, intermediate optical rails 108 may be curved or bent between ends. FIG. 11 illustrates intermediate optical rails 108-2 at horizontal plane 230-3 in another illustrative embodiment. Intermediate optical rails 108-2 are curved or bent outward between ends 510-511. Thus, a distance 1104 or separation between longitudinal middle portions 521 (also referred to as central segments) of intermediate optical rails 108 is larger than a distance 1102 or separation between ends 510-511. The intermediate optical rails 108 on other horizontal planes 230 may have a similar configuration as shown in FIG. 11.

One or more optical mode couplers 100 as disclosed above may be used in a variety of optical devices. FIG. 9 illustrates optical devices 900 that implement one or more optical mode couplers 100 in an illustrative embodiment. An optical device may be formed as a PIC using integrated photonics. In general, an optical device 900 is an apparatus configured to process light or optical waves. Optical device 900-1, for example, may comprise a coherent optical module 912 (e.g., a coherent optical transmitter or a coherent optical transceiver) that implements one or more optical mode couplers 100. Optical device 900-1 may be built on an SOI wafer 120, and is schematically illustrated as including photonic devices 922. Optical mode coupler(s) 100 is configured to optically couple photonic devices 922 to optical waveguides. For example, a photonic device 922 may include an optical waveguide 105 (e.g., Lithium Niobate) as discussed above, and optical mode coupler 100 is configured to optically couple the optical waveguide 105 to another optical waveguide 104 (e.g., a silicon-core optical waveguide formed in the silicon device layer 126 of the SOI wafer 120, an optical waveguide formed with a silicon nitride core, etc.).

Optical device 900-2, for example, may comprise an optical modulator 913 for data modulation of optical carrier(s), that implements one or more optical mode couplers 100. An optical modulator 913 is a type of optical device that manipulates a property of light, such as a radio-frequency traveling wave operated Mach-Zehnder Modulator (MZM), a ring resonator MZM, an optical ring resonator, etc.

One or more of optical devices 900, or other optical devices, may include or implement an MZM. FIG. 10 illustrates an optical device 1000 that implements one or more MZMs 1001 in an illustrative embodiment. As above, optical device 1000 may be built on an SOI wafer 120, and is schematically illustrated as including two MZMs 1001. Although two MZMs 1001 are shown in FIG. 10, more or less MZMs 1001 may be implemented in other embodiments.

In general, an MZM 1001 includes an optical splitter 1002, a pair of optical modulation arms 1004-1005, and an optical combiner 1008. Input power (P_{IN}) from a laser (not shown) is launched into an input port 1010, and is split at optical splitter 1002 to be shared by optical modulation arm 1004 and optical modulation arm 1005 (e.g., the power splitting may cause about equal amounts of the light from input port 1010 to be directed to each of the optical modulation arms 1004 and 1005). One or both of the optical modulation arms 1004-1005 has one or more segments therealong configured to act as a variable optical phase shifter when driven by a modulation voltage. A modulation voltage applied across the segment of the optical modulation arm 1004-1005 alters the refractive index of the segment and changes a phase shift accumulated by the light propagating therethrough. Optical combiner 1008 combines the light from the two optical modulation arms 1004-1005. In the optical combiner 1008, the light from the optical modulation arms 1004-1005 constructively or destructively interferes depending on an accumulated phase difference between the light from the different optical modulation arms 1004-1005, e.g., to provide amplitude modulation of the output light (P_{OUT}) at output port 1016. In embodiments having, e.g., nested pairs of two such MZM optical modulators, output optical combiner 1008 can output light having separate in-phase and quadrature-phase modulation.

Optical mode couplers 100 may be implemented at optical modulation arms 1004-1005 of the MZM 1001. For example, a nonconventional material, such as Lithium Niobate, may be used in the optical modulation arms 1004-1005 due to its electro-optical modulation properties. Thus, an optical modulation arm 1004-1005 acts as an optical waveguide 105 as discussed above. Optical mode couplers 100 may be used to optically couple light into and/or out of the optical modulation arms 1004-1005. For example, an optical mode coupler 100 may optically couple an optical modulation arm 1004-1005 to another optical waveguide 104 (e.g., a silicon-core optical waveguide formed in the silicon device layer 126 of the SOI wafer 120, an optical waveguide formed with a silicon nitride core, etc.). In an embodiment, an optical mode coupler 100 may be used to optically couple light from an optical waveguide 104 into an optical splitter 1002 of an MZM 1001. In an embodiment, an optical mode coupler 100 may be used to optically couple light out of an optical combiner 1008 of an MZM 1001 and into an optical waveguide 104. Although examples are given above, optical mode couplers 100 may be used in other locations of an MZM 1001.

Although specific embodiments were described herein, the scope of the disclosure is not limited to those specific embodiments. The scope of the disclosure is defined by the following claims and any equivalents thereof.

## Claims

1. An optical device comprising:
a photonic integrated circuit having an optical mode coupler, the optical mode coupler optically coupling a first planar optical waveguide having a first optical core at one horizontal plane of the photonic integrated circuit to a second planar optical waveguide having a second optical core at a different second horizontal plane of the photonic integrated circuit;
wherein the optical mode coupler comprises two or more intermediate optical layers stacked vertically between the horizontal planes of the optical cores of the planar optical waveguides in the photonic integrated circuit, each of the intermediate optical layers comprising one or more optical rails, the optical mode coupler comprising optical cladding of a lower refractive index around the optical rails; and
wherein the optical mode coupler is configured to cause light received from the first planar optical waveguide to excite an optical mode and guide the light of the optical mode such that the optical mode substantially overlaps the first planar optical waveguide and the optical rails of at least two of the intermediate optical layers in a vertical cross-section of the photonic integrated circuit.

2. The optical device of claim 1, wherein the optical mode coupler is configured to guide the light of the optical mode such that the optical mode substantially overlaps the second planar optical waveguide and the optical rails of at least two of the intermediate optical layers in the same or another vertical cross-section of the photonic integrated circuit.

3. The optical device of claim 1, wherein at least one of the intermediate optical layers has two or more of the optical rails.

4. The optical device of claim 3, wherein at least one of the optical rails of the at least one of the intermediate optical layers is located on each side of the optical cores.

5. The optical device of claim 3, central segments of the two or more of the optical rails are more separated than ends of the two or more of the optical rails.

6. The optical device of claim 1, wherein the planar optical waveguides are configured to have a fundamental optical mode in at least one of an optical communications C-band, O-band, S-band, and L-band.

7. The optical device of claim 1, wherein the second optical core of the second planar optical waveguide has a refractive index smaller than a refractive index of the first optical core of the first planar optical waveguide.

8. The optical device of claim 1, wherein part of the optical mode coupler is vertically located between tapered portions of the optical cores of the first and second planar optical waveguides.

9. The optical device of claim 1, wherein the optical rails extend about parallel to ends of the optical cores of the planar optical waveguides, and at least one of the intermediate optical layers has the optical rails located on opposite sides of the first optical core.

10. The optical device of claim 9, wherein the one of the intermediate optical layers closest to the second planar optical waveguide has a single one of the optical rails located vertically below the second optical core of the second planar optical waveguide.

11. The optical device of claim 9, wherein the optical mode coupler is vertically located between tapered portions of the first and second optical cores of the planar optical waveguides.

12. The optical device of claim 1 wherein at least some of the optical rails are tapered at both ends thereof.

13. The optical device of claim 1 wherein the second optical core comprises Lithium Niobate, and the first optical core is a silicon nitride optical core.

14. The optical device of claim 1 wherein the second optical core comprises a group III-V semiconductor material or a group II-VI semiconductor material, and the first optical core is a silicon nitride optical core.

15. The optical device of claim 1 wherein the second optical core comprises Barium Titanate.

16. The optical device of claim 1 wherein the second optical core is a silicon optical core, and the first optical core is a silicon nitride optical core.

17. The optical device of claim 1 wherein the first optical core is a silicon optical core.

18. The optical device of claim 1 wherein the optical rails are silicon nitride optical rails.

19. The optical device of claim 1 further comprising:
a Mach-Zehnder optical modulator;
wherein the optical mode coupler is part of an optical input or an optical output of the Mach-Zehnder optical modulator.

20. The optical device of claim 1 further comprising:
a coherent optical transmitter including the optical mode coupler.
